# EUROPEAN PATENT SPECIFICATION

(11) **EP 3 568 240 B1**
(45) Date of publication and mention of the grant of the patent: **14.08.2024**
(21) Application number: 18738579.4
(22) Date of filing: 10.01.2018
(51) Int. Cl.: B07C 5/342, C02F 11/04, C02F 3/28, D21B 1/02, D21B 1/32, B09B 3/00, B09B 5/00, D21H 11/14

(54) **SOLID WASTE PROCESSING WITH DIVERSION OF CELLULOSIC WASTE**
FESTSTOFFABFALLVERARBEITUNG MIT ABZWEIGUNG VON CELLULOSEABFALL
TRAITEMENT DE DÉCHETS SOLIDES PAR DÉVIATION DE DÉCHETS CELLULOSIQUES

(30) Priority: 12.01.2017 US 201762445347 P; 15.09.2017 US 201715705704
(43) Date of publication of application: 20.11.2019
(73) Proprietor: Anaergia Inc., Burlington, ON L7L 4X5 (CA)
(72) Inventor: BENEDEK, Andrew, Rancho Santa Fe, California 92067 (US); SCHERSON, Yaniv D., Carlsbad, California 92008 (US); OUELLET, Hans Frederick, San Diego, California 92127 (US); JOSSE, Juan Carlos, Aliso Viejo, California 92656 (US)
(74) Representative: BSB Patentanwälte Schütte & Engelen Partnerschaft mbB
(86) International application number: PCT/CA2018/050019
(87) International publication number: WO 2018/129616

(56) References cited:
- WO-A1-2013/032516
- WO-A1-2015/053617
- DE-A1- 3 934 478
- US-A- 4 153 514
- US-A- 5 387 267
- US-A1- 2008 020 456
- US-A1- 2013 316 428
- US-B2- 8 877 468

## Description

### RELATED APPLICATIONS

This application claims priority from U.S. Application Serial No. 15/705,704, Solid Waste Processing with Diversion of Cellulosic Waste, filed on September 15, 2017, and also claims the benefit of US Provisional Patent Application Serial No. 62/445,347, Process to Recover a Portion of Post-Recycling Municipal Solid Waste, filed on January 12, 2017.

### FIELD

This specification relates to treating waste such as municipal solid waste (MSW).

### BACKGROUND

Solid waste can be divided into various fractions distinguished, among other things, by how easily they can be biodegraded. The organic fraction is the part of the waste that is most easily biodegraded and may also be referred to as organic waste. The organic fraction is primarily made up of food waste, but may also include leaf and yard waste or other materials. The organic fraction is approximately 40% of ordinary municipal solid waste (MSW) after recyclables are removed.

Historically, organic waste was landfilled with other solid waste. However, the organic fraction of solid waste is the major cause of greenhouse gas emissions, leachate and odors in landfills. There is a general trend to divert organic waste for biological treatment, for example by anaerobic digestion (AD) or composting. Most biological treatment steps require some preprocessing of the waste such as debagging and sorting to remove large items such as bottles and cans. Certain biological treatments, such as some composting methods and high-solids slurry and wet (low solids) anaerobic digestion, also require that the waste be reduced in size and homogenized. The size reduction is typically done in a device that comminutes the waste, such as a hammer mill, shredder or pulper. In some cases, the comminuting device also provides a coarse separation of contaminants (i.e. material that is not readily biodegraded, such as plastic). Alternatively, a separate separation device may be added.

Wet anaerobic digestion is typically performed in one or more mixed tanks. These systems are entirely contained and so allow for high levels of odor control and biogas recovery. In many cases, the organic waste can also be co-digested with wastewater treatment plant (WWTP) sludge by modifying existing WWTP digesters rather than building new facilities.

US Publication 2013/0316428 describes an alternative process in which an organic fraction containing biological cells is separated from solid waste in a press. The organic fraction is extruded through a grid having small-bore holes, under a pressure higher than the burst pressure of the cell membranes. The cells are disrupted and a gel or paste of a doughy consistency is produced. The gel can be digested in an anaerobic digester. The press may be as described in European Publication Nos. 1207040 and 1568478 and Italian patent publication ITTO20111068. In general, these presses use a plunger to compress waste that has been loaded into a cylinder. The sides of the cylinder are perforated with radial holes.

US Patent 8,877,468 describes a process in which materials containing lignocellulose are treated by pyrolysis under conditions (low temperature and long residence time) that favour the production of a liquid containing organic acids and alcohols. This liquid is suitable for conversion to biogas (primarily methane) in an anaerobic digester.

DE 3934478 A1 discloses a process for the treatment of household, industrial and other similar waste, whereby cellulosic particles are separated by means of a pulper and subsequently fed to a paper mill or dried and recovered as powder.

### INTRODUCTION

This specification describes a system and process for treating waste, for example mixed municipal solid waste (MSW) or post-recycling mixed municipal solid waste.

The inventors have observed that methods as described above do not divert large amounts of mixed MSW from landfill in all cases. Comminuting devices treating MSW do not, generally speaking, produce high quality products. Presses may divert, for example, 20-30% of the mass of mixed MSW for efficient anaerobic digestion, but this still leaves a large portion of the MSW for landfill.

A system described herein includes a press and a cellulosic material recovery unit. The press is adapted to provide a wet fraction of the waste suitable for anaerobic digestion and rejects. The cellulosic material recovery unit is adapted to receive the rejects and separate cellulosic materials such as paper from it. The cellulosic material recovery system may comprise, for example, a pulper or an optical sorter.

In a process described herein, waste is separated into an organic fraction and rejects. For example, the waste may be separated in a press, or by a screen followed by a press. The organic fraction is treated by way of anaerobic digestion. The rejects are separated to extract cellulosic material such as paper. The cellulosic material is treated by way of anaerobic digestion, optionally co-digested with the organic fraction. The cellulosic material may be pulped or made into a slurry before being digested, before or after being extracted from the rejects.

### BRIEF DESCRIPTION OF THE FIGURES

Figure 1 is a schematic drawing of a solid waste treatment system.
Figure 2 is a schematic drawing of part of a second solid waste treatment system.

### DETAILED DESCRIPTION

Recovery or large pieces of recyclable materials (i.e plastics, metals, cardboard and paper) from mixed municipal solid waste MSW is a well-established practice. There are several material recovery facilities (MRFs) that process mixed MSW as opposed to single stream waste, which is separated for recycling at the source. These facilities are known in the industry as "dirty MRFs". Several mechanical processes are used to recover recyclables from mixed waste. These processes include bag openers, shredders, screening, ballistic separators, wind sifters, optical sorters, magnets, Eddy Current separators, and manual sorting. Removing and then recycling metals, OCC, paper and plastics results typically in 10 to 15% diversion of mixed MSW from landfill.

Mixed MSW also contains food waste and other organic materials. Typically the vast majority of the food waste contained in MSW passes through 6 to 10-inch (coarse) trommel or disc screens, along with other materials that do not have recycling value or that escaped the recycling process upstream. These materials include mixed and soiled paper, broken glass, textiles, grit and stones, wood, plastic film, and small size ferrous and non-ferrous metals. Paper and other fibers can account for as much as 20 to 30% of the coarse screening undefraction.

Wet organics can be recovered from the mixed MSW underfraction using an extrusion press as described for example in the patent publications described in the background section above. The coarse screen underfraction is suitable to feed to one or more commercially available presses such as an Organics Extrusion Press OREX 400, 500 or 1000 press sold by Anaergia. The extrusion press applies pressure on the waste in a confined extrusion chamber that contains perforations. A potion of the organic waste fluidizes under pressure and exits through the orifices to produce a paste-like material. This paste-like material, which may be called a wet fraction, is a suitable feedstock for anaerobic digestion (AD) or composting. The balance of the material fed to the press exits as rejects. Organics recovery for digestion achieve by way of the press provides an additional 20 to 30% diversion in typical North American mixed MSW.

Many municipalities throughout North America and other parts of the world require higher diversion of mixed MSW from landfill than what traditional "dirty MRF" recycling can achieve even when coupled with organics extraction for AD or composting. While the press rejects could be further processed into refuse derived fuel (RDF) for use as fuel for power generation or cement kilns, thermal solutions such as this are not accepted as landfill diversion in many communities, for example because of the carbon dioxide or other emissions associated with these applications.

The press rejects can contain up to 40% of paper and pulpable fibers with no conventional recyclable value. However, this cellulosic material can be used as feedstock for anaerobic digestion alone or with the wet fraction from a press. The combination of upstream materials recycling, food organics extraction and cellulosic material recovery can, in at least some cases, results in 60% or more diversion of mixed MSW from landfill.

The cellulosic material is sent to the digester without treating the cellulosic material by pyrolysis prior to digestion. However, digestate including remnants of the cellulosic material may be treated by pyrolysis with one or more products of pyrolysis returned to the digester.

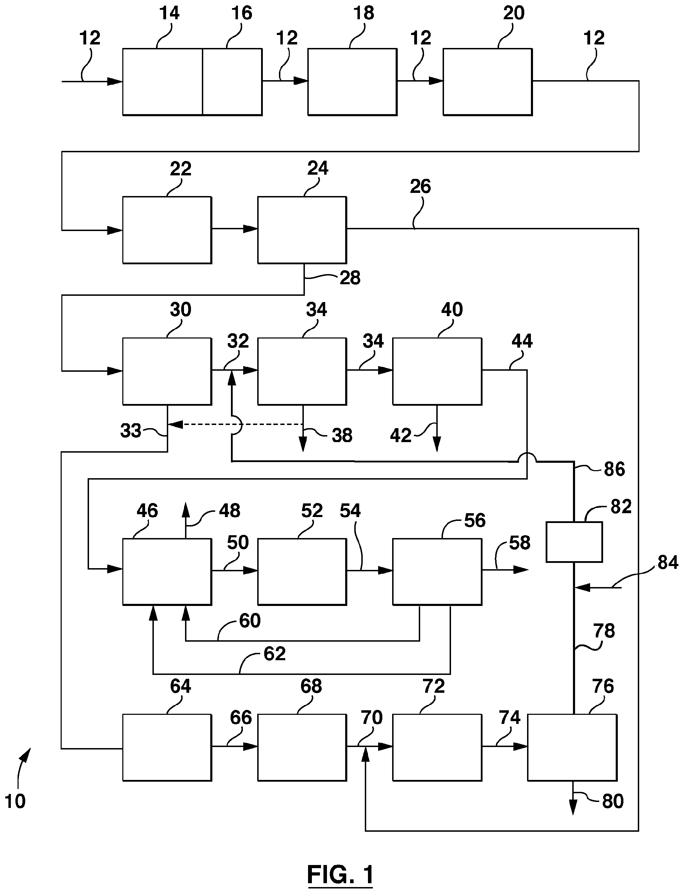

Figure 1 shows a system 10 for treating solid waste 12. Solid waste 12, which may be for example municipal solid waste (MSW), is collected in trucks and dumped in piles in a tipping floor or pit 14. A loader or grapple places the waste into a dosing feeder 16 that feeds waste 12 into the processing line conveyor at a generally consistent rate suitable for the downstream processes. The waste 12 travels on the conveyor through a pre-sorting area 18. In the pre-sorting area 18, large un-bagged bulky items and other non-processible materials (such as furniture, rolls of chainlink fence, carpets, toilet bowls, etc are manually removed from the conveyor.

The waste 12 continues from the pre-sorting area 18 and drops into a bag opener 20. The bag opener 20 opens plastic garbage bags. For example, the bag opener 20 may use a coarse tearing shredder, for example a single or double shaft shredder with a 200 mm spacing, to open the bags. The waste 12 with opened bags is then placed on another conveyor.

The waste 12 continues on the conveyor below an over-belt magnet 22 to remove large ferrous metal items. The waste 12 then passes through a coarse screen 24. The coarse screen 24 may be, for example, a disc, trommel or roller screen with 100-250 mm or 100-150 mm openings. The coarse screen 24 retains some of the waste 12, for example about 30-40%, as coarse screen overs 26. The screen overs 26 contain mostly large, generally dry, items of waste. The remaining 60-70% of the waste 12 passes through the coarse screen 24 and becomes coarse screen unders 28. The coarse screen unders 28 contains mostly wet or organic matter such as food waste, small containers and some inerts. In an efficient coarse screening process, about 95% of food waste in the waste 12 may end up in the coarse screen unders 28.

The screen overs 26 contain most of the recyclable materials in the waste 12. Some of the recyclable material can be extracted, for example with optical sorters or ballistic separators or other equipment. In the further description below, the screen overs 26 are assumed to have conventionally recyclable material, which may include some paper, removed from them. However, even after recovering recyclable materials from the screen overs 26, including conventionally recyclable paper, there is still wet, mixed and dirty paper and possibly other cellulosic material left in the screen overs 26. The remaining paper has low recyclable value, for example because it is not economical to recover and use for making recycled paper by conventional techniques. However, as will be described below, some of the remaining paper and other cellulosic material can be recovered, for example in a dry process with further use of optical sorters, and diverted from landfill. The remaining paper and possibly other cellulosic material is used as a feedstock for anaerobic digestion. In examples described further below, cellulosic material recovered from the screen overs 26 is converted into a slurry, for example by being macerated with a wet in-line grinder, and sent to an anaerobic digester. The cellulosic material recovered from the screen overs 26 may be combined, upstream of the digester or in the digester, with additional paper or other cellulosic material recovered, by either a wet or dry process described below, from the dry fraction or rejects of a press, to be described below.

The coarse screen unders 28 are treated in a press 30. The press 30 compresses the coarse screen unders 28 at high pressure through small perforations in an enclosed extrusion chamber. For example, the pressure may be at least 50 bar or otherwise sufficient to mobilize the putrescible organic material through the perforations. The organics are separated from the rest based on their viscosity. The perforations may be, for example, 4 to 20 mm diameter circular holes. The press 30 separates the coarse screen unders 28 into a wet fraction 32, which passes through the perforations, and rejects 33 that remain in the extrusion chamber after compression. The wet fraction 32 contains soluble organic compounds and particulate material. Roughly half of the coarse screen unders 28 is retained as rejects 33. Preferably, 95% or more of the organics in the coarse screen unders 28 is contained in the wet fraction 32.

The press 30 may be as described in International Publication Number WO 2015/053617, Device and Method for Pressing Organic Material Out of Waste, or as described in European Publication Nos. 1207040 and 1568478. Suitable presses include presses sold by DB Italy (formerly VM Press) and DB Technologies or their parent company Anaergia including the VM 2000 and the Organics Extrusion Press (OREX) 400, 500 and 1000 presses. Other presses may also be used.

Other means of separating the coarse screen unders 28 may also be used. For example, the coarse screen unders 28 can be milled under high force shearing, hammering, or pulverizing in order to dislodge material and separate a wet fraction 32 containing organics from a dry fraction equivalent to rejects 33. For example, a hammer mill can violently dislodge organics and break large organic pieces into small particles or produce a slurry. In some cases, the mill may require dilution of the coarse screen unders 28. The organics can be recovered separated from the dry fraction by a screen that retains the dry fraction and permits the passage of organics driven by the hammering or other shearing force. Alternatively, the pulverized mixture of organics and dry fraction can pass through the mill and into a screw press that separates the organic slurry and water from the dry fraction through a screen.

The wet fraction 32 passes into a polisher 34. In the polisher 34, the wet fraction 32 is fed into a screen cylinder surrounding a rotor. Particles of organic matter in the wet fraction 32 are flung outward from a rotor by its rotating movement and centrifugal forces. The particles of organic material are discharged through perforations in the screen to a first discharge opening. Air flowing along the axis of the rotor carries lighter material past the perforations to a second discharge opening. The airflow may be created by the rotor blades or by a separate fan. The rotor blades may optionally also scrape the inside of the screen. In this way, lighter particles (particularly bits of plastic) are separated from the organic particles in the wet fraction 32. The polisher 34 thereby produces polished wet fraction 36 and floatables 38. The floatables 38 include small pieces of plastic and paper that would tend to collect at the top of an anaerobic digester. A suitable polisher 34 is described in International Publication Number WO 2015/050433. A similar polisher is sold as the DYNAMIC CYCLONE by DB Technologies. Floatables 38 can be sent to landfill or optionally combined with rejects 33.

The polished wet fraction 36 is treated in a grit removal unit 40. The grit removal unit 40 preferably includes a hydro-cyclone. Water may be added if required to dilute the polished wet fraction 36 to bring its solids content to or below the maximum solids content accepted by the grit removal unit 40. The grit removal unit 40 removes grit 42 large enough to settle in an anaerobic digester. Separated grit 42 is sent to landfill, optionally after rinsing it. One suitable grit removal unit is the PRO:DEC system by CD Enviro. Other grit removal units may be used.

Degritted wet fraction 44 is sent to an anaerobic digester 46, alternatively referred to as a digester for brevity. The digester 46 may be a wet anaerobic digester. The digester 46 may have one or more mixed covered tanks. Suitable digesters are sold under the Triton and Helios trade marks by UTS Biogas or Anaergia. The digester 46 produces product biogas 48 which may, for example, be used to produce energy in a combined heat and power unit or upgraded to produce biomethane. The digester 46 also produces sludge 50.

Sludge 50, alternatively called digestate, is sent to a drying unit 52. In the drying unit 52, the sludge is treated in a mechanical dewatering unit, for example a centrifuge, filter press or screw press. The mechanical dewatering unit separates the sludge 50 into a waste liquid, which may be sent to a sanitary drain or treated on site for discharge or re-use, and a de-watered cake. The de-watered cake is sent to a sludge cake dryer to further reduce its water content. Preferably, the de-watered cake is formed into pellets 54. The pellets 54 may be transported, for example, by screw conveyors or in bags or bins.

Pellets 54 are sent to a pyrolysis reactor 56. The pyrolysis reactor 56 heats the pellets 54 in the absence or a deficiency of oxygen, to produce biochar 58, pyrolysis liquid 60 and pyrolysis gas 62.

The biochar 58 may be sold as a soil enhancer, sent to landfill or processed further, for example in a gasification plant to make syngas. Pyrolysis liquid 60, including condensed vapors, is recycled to anaerobic digester 46 as additional feedstock for digestion. Pyrolysis gas 62 is also sent back to the digester 46. The pyrolysis gas 62 may be injected into the bottom of the digester 46. The pyrolysis gas 62 is scrubbed to some extent as it rises in bubbles though sludge in the digester 46, and then mixes with biogas 48 in the headspace of the digester 46. Part of the pyrolysis gas 62, particularly the hydrogen, may also be transferred into the sludge and be biologically converted to methane. The transfer of pyrolysis gas 62 to sludge in the digester 46 can optionally be enhanced by injecting the pyrolysis gas 62 as fine bubbles, by adding the pyrolysis gas through a dissolution cone into a stream of recirculating sludge, or by recirculating the headspace gas. Optionally, if the recycle of pyrolysis gas 62 increases the concentration of carbon monoxide (CO) in the biogas 48 too much, CO can be removed from the pyrolysis gas 62 or biogas 48 by membrane separation, or the pyrolysis gas 62 can be at least partially converted to methane before being added to the digester 46.

The temperature in the pyrolysis reactor 56 may be over 270 degrees C., over 300 degrees C, or over 320 degrees C. In some embodiments, the temperature in the pyrolysis reactor is less than 450 degrees C, or less than 400 degrees C or less than 350 degrees C. The residence time may be 5-30 minutes, or 10-20 minutes. Pyrolysis of cellulosic material at over 450 degrees C can produce an excess of oils that may be toxic to microorganisms in an anaerobic digester. Pyrolysis at lower temperatures produces less of the toxic substances and also produces more pyrolysis liquid 60 relative to pyrolysis gas 62. This is beneficial since the pyrolysis liquid 60 is easily mixed into sludge in the anaerobic digester 46 and enhances production of biogas 48. However, at very low temperatures the production of biochar 58 dominates and more material must be removed from the system 10. A temperature of 320 to 350 degrees and residence time of about 10-20 minutes is particularly useful.

Rejects 33 are sent to a shredder 64. The rejects 33 emerge from press 30 as chunks having about 38-50% water by weight. The chunks may have an average volume of about 0.02 to 0.1 cubic meters. The shredder 64 may have, for example, a single shaft crusher or shredder. The shredder 64 breaks up the chunks and produces shredded rejects 66.

The shredded rejects 66 are sent to a vibrating screen 68. The vibrating screen 68 may have 30 mm to 50 mm openings. Inerts and remaining organic materials fall through screen vibrating screen 68 and may be sent to landfill. Vibrating screen overs 70 includes solids such as plastic bottles, bags, fabric, and paper. Aluminum cans may also be present in the overs. If so, an eddy current separator can be used to remove non-ferrous metals. A drum magnet may also be used to remove remaining small pieces of ferrous material metal, if any.

The vibrating screen overs 70 are optionally combined with coarse screen overs 26. Optionally, the coarse screen overs 26 may have first passed through additional recyclable recovery units. Recyclables can be recovered, for example by manual separation, optical sorters or ballistic separators.

The combined overs 26, 70 pass through a wind sorter 72. In the wind sorter 72, air nozzles blow material from one belt to another over a gap. RDF fluff 74 flies over the gap. Dense material, i.e. rocks, falls into the gap and is sent to landfill. The RDF fluff 74 has about 25% moisture and contains plastic, paper, textiles, other dry fibers, etc.

The RDF fluff 74 goes to an optical sorter 76. The optical sorter 76 separates plastic and other non-cellulosic material from cellulosic material such as wood and paper. Near infrared sensors determine if matter is cellulosic or not. Air jets then separate the RDF fluff 74 into cellulosic fluff 78 and non-cellulosic 80 fluff with about 85-95% efficient separation. Optionally, multiple optical sorters 76 may be used in series. The extracted cellulosic fluff 78 can have 80% or more purity when one optical sorter 76 is used and 85% or more purity with two optical sorters 76 are used in series.

In an alternative embodiment, the combined overs 26, 70 pass through the optical sorter 76 before passing through the wind sorter 72. In this case, sensors locate cellulosic matter in the combined overs 26, 70 and air jets separate the cellulosic matter, which is cellulosic fluff 78, from the combined overs 26, 70. Non-cellulosic fluff 80 is then separated from the remainder of the combined overs 26, 70 in the wind sorter 72.

In other embodiments, one or both of the vibrating screen overs 70 and coarse screen overs 26 are processed separately, for example as described for combined overs 26, 70, to separate cellulosic fluff 78. If vibrating screen overs 70 and coarse screen overs 26 are both processed to separate cellulosic material separately, the cellulosic fluff 78 from both streams may be combined and treated together or be treated separately.

Non-cellulosic fluff 80 is sent off-site. The non-cellulosic fluff 80 could be combusted to recover heat energy or converted to bio-oil by pyrolysis. If pyrolysis is used, this may be a high temperature, low residence time process that emphasizes the production of long chain hydrocarbons. Bio-oil produced from plastics in this way is useful in making fuels but toxic to microorganisms in digester 46 unless very high temperatures are used.

Some or all of the cellulosic fluff 78 is treated in the digester 46 or another digester, with or without wet fraction 32. In some embodiments, the cellulosic fluff 78 is pulped or otherwise made into a slurry 86. Water 84 is added in an amount sufficient for the slurry to have, for example, 10-30%, 15-25%, or 20-22% solids. Optionally, the slurry may be made in a pump 82, for example a chopper pump or a positive displacement pump with an in-line grinder or macerator.

The slurry 86 may be treated in one or more of the processes described above for the wet fraction 32 prior to being treated in the digester 46. For example, the slurry 86 may be treated in the polisher 34 or the grit removal unit 40 or both. In the example of Figure 1, the slurry is combined with the wet fraction 32 upstream of the polisher 34 and then treated as described for the wet fraction 32 in Figure 1. Optionally, one or more further streams of digestible material, for example waste water treatment sludge, source separated organics or commercial or industrial food waste, may be added to the digester 46.

The cellulosic fluff 78 may be primarily paper. Optionally, the cellulosic fluff 78 may be soaked in water before pulping it.

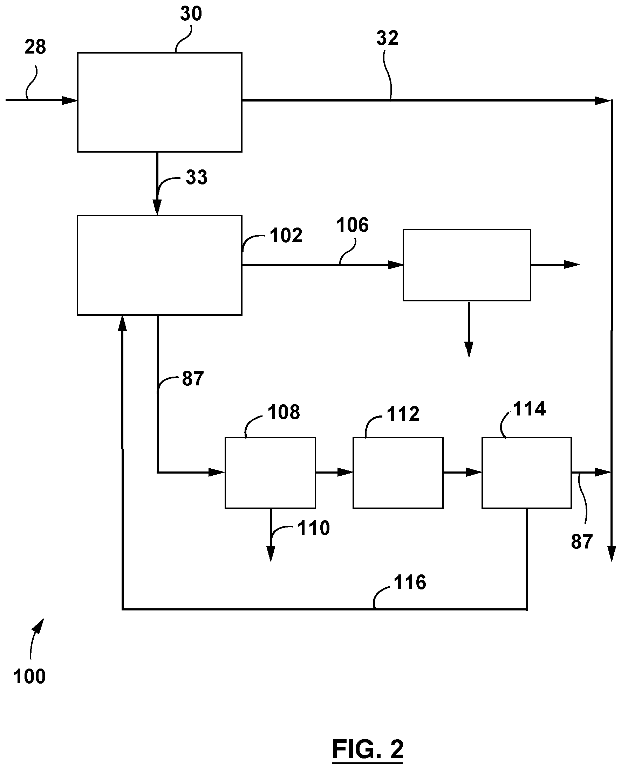

Figure 2 shows parts of a second system 100 that uses a wet method to produce another slurry containing cellulosic material. The slurry produced in the second system 100 will be called pulp 87 to help avoid confusion between the Figures, although pulp 87 is a slurry and the term slurry includes pulp 87 when not referring to a specific stream in Figure 1. Other parts of the second system 100 are as shown in Figure 1 and described above for the system 10. In the second system 100, coarse screen unders 28 (produced as described in the system 10 of Figure 1) are sent to a press 30 to produce wet fraction 32. The rejects 33 are fed to a pulper 102, for example a drum or tub pulper as used in the pulp and paper industry, to recover the fibers in the paper and other cellulosic materials in the rejects 33. In the example shown, a continuous drum pulper is used. The rejects 33 may be fed directly to the pulper 102 after being extracted from the press 30.

The rejects 33 may be in the form of clumps with 40 to 45% moisture content. The rejects 33 are diluted near at the inlet end of the pulper 102 to about 10-30% solids, for example about 20% solids, with recirculated water, and make up water if and as required, heated to about 45 degrees C. The pulper 102 produces a tumbling effect at its inlet end that, after approximately 15 minutes, creates pulp 87. In the example of a drum pulper, the rotary drum of the pulper also contains a screening section at its outlet end. In this section the material is diluted to about 4% solids and is washed as it is screened. The screen, for example with 15 mm holes, allows the pulp 87 to exit. Along with the pulp 87, some grit, plastics and other non-pulpable materials smaller than 15 mm in size exit the screen. The screen overs exit at the end of the screen as washed pulper rejects 106. The pulp 87 that exits through the screen holes is optionally further cleaned. The further cleaning, alternatively called polishing, can include removing heavies 110, such as grit and metals, in a hydrocyclone 108 and dilution to about 10-15% or 12 to 14% solids. The further cleaning can also include treatment in a screen 112, with openings in a range, for example, of 200 microns to 1.5 mm. After cleaning in the screen 112, the pulp 87 can be thickened or dewatered, for example using a screw press 114. The screw press filtrate 116 can be used as dilution water in one or more of the pulping, screening and grit removal unit processes. Optionally, the filtrate 116 may treated with dissolved air flotation to remove suspended solids before reuse, which also helps avoid accumulation in the process. The pulp 87 is sent to the digester 46 of Figure 1, optionally after being mixed with wet fraction 32 and/or being treated in one or more of the unit process used to treat the wet fraction 32 in Figure 1. Although not shown in Figure 2, the second system 100 also generates coarse overs 26 which may be treated as described in relation to Figure 1 or generally herein to provide an additional stream of slurry 86 that is sent to the digester 46 separately or as part of a mixture with pulp 87 and/or wet fraction 32.

Alternatively, the slurry 86 from the system 10 or pulp 87 from the second system 100 could be used as feedstock in pulp and paper mills. Feeding un-pressed mixed MSW to drum pulpers has been attempted but without material success. The inventors believe that a high content of food waste exits the pulper along with the paper pulp and makes the pulp unsuitable as feedstock for pulp and paper mills. The use of an extrusion press before pulping improves the quality of the pulp and produces a marketable pulp that is clean and suitable for various paper products such as cardboard. The combined used of an extrusion press that extracts food waste organics and a pulper (in a wet process) or optical sorter (in a dry process) to treat the press rejects after organics extraction enables the recovery of valuable paper and other fiber in the form of a marketable pulp.

Bench scale trials were performed to determine if cellulosic material diverted from solid waste is digestible, alone or in combination with the wet fraction from a press treating the solid waste. For the trials, a mixture of paper types was made to simulate cellulosic material diverted from solid waste. The mixture contained 21 % recyclable Kraft paper, 8% newspaper, 4% high-grade office paper, 28% mixed recyclable paper, 37% compostable paper and 3% non-recyclable paper. The paper samples were shredded, mixed together and then soaked in 13 mL of distilled water per gram of paper for 3 days. The paper and water were then blended with an immersion blender to a pulp. Alternative mixtures prepared without soaking did not create a homogenous pulp with the lab scale immersion blender but it is expected that commercial mixing equipment may be able to produce acceptable mixtures with less soaking time, or without soaking, and at higher solids content.

Samples of mixed paper as described above were digested in a benchtop wet anaerobic digester alone and in combination with wet fraction from a press treating mixed solid waste. In Trial A, 1.46 g of paper was digested. In trial B, 0.54 g of wet fraction was digested. In Trial C, 1.46 g of paper and 0.54 g of wet fraction were digested together. After 14 days of digestion, the amount of methane produced was 337 mL in Trial A, 189 mL in Trial B, and 532 mL in Trial C. Since the methane production of Trial C is approximately equal to the sum of the methane production of Trials A and B, these results suggest that adding even significant amounts of paper did not create material toxicity or otherwise inhibit digestion of the wet fraction. The paper produces less methane per unit mass than wet fraction however the amount of methane produced by the paper, and in particular by paper and wet fraction blends, is within the range of workable digester designs.

Digestate from treating paper and a mixture of paper and wet fraction were passed through a 2mm wire screen. No large pieces of undigested paper were retained on the screen from either sample. The paper digestate was flowable and was easily washed through the screen with excess water, but did not pass through the screen easily by gravity without adding wash water. The paper and wet fraction digestate flowed through the screen easily by gravity without adding wash water. While it is expected that both digestate samples could be dewatered in full scale equipment, the paper and wet fraction digestate might be easier to process.

Unless stated otherwise, solids contents specified herein are total solids (TS) by weight. In other embodiments, the same or similar parameters can be used as specifications of dried solids (DS) by weight. The solids concentrations and other operating parameters described in this specification provide examples to help describe the invention but are not critical. It is expected that other embodiments could operate with other parameters, for example in a range from 50% to 150% of any values or ranges given herein.

## Claims

1. A process comprising steps of,
separating waste to produce rejects and a wet fraction;
separating cellulosic rejects from the rejects; and,
treating the cellulosic rejects by anaerobic digestion.

2. The process of claim 1 further comprising co-digesting the wet fraction with the cellulosic rejects.

3. The process of claim 1 or 2 wherein the step of separating waste comprises pressing waste.

4. The process of any of claims 1-3 wherein the waste comprises municipal solid waste.

5. The process of any of claims 1-4 wherein the step of separating rejects comprises use of an optical sorter.

6. The process of any of claims 1-5 comprising mixing cellulosic fluff separated by the optical sorter with water and macerating the cellulosic fluff.

7. The process of any of claims 1-6 wherein the step of separating rejects comprises use of a pulper or otherwise diluting the rejects with heated water, tumbling the diluted rejects and screening the diluted rejects.

8. The process of any of claims 1-7 wherein some or all of the cellulosic rejects are converted into a slurry.

9. The process of any of claims 1-8 wherein the slurry is mixed with the wet fraction prior to treatment by anaerobic digestion.

10. The process of claim 8 wherein the slurry is treated to remove floatables and/or grit prior to anaerobic digestion.

11. The process of any of claims 1-10 further comprising separating cellulosic material from coarse screen overs and digesting it.

12. The process of claim 11 comprising mixing cellulosic material from coarse screen overs with cellulosic rejects, producing a slurry comprising the mixture, mixing the slurry with the wet fraction, and digesting the mixed slurry and wet fraction.

13. A solid waste treatment system comprising,
a press (30) for separating rejects from waste;
a pulper (102) or optical sorter (76); and,
an anaerobic digester (46) for receiving cellulosic rejects,
wherein the pulper or optical sorter separates the cellulosic rejects from the rejects.

14. The system of claim 13 comprising a pulper (102).

15. The system of claim 13 or 14 comprising an optical sorter (76).

## Patentansprüche

1. Verfahren, das die folgenden Schritte umfasst,
Trennen von Abfall, um Rejekte und eine Nassfraktion zu erzeugen;
Trennen der zellulosehaltigen Rejekte von den Rejekten; und,
Behandeln der zellulosehaltigen Rejekte durch anaerobe Vergärung.

2. Verfahren nach Anspruch 1, ferner umfassend die Co-Vergärung der Nassfraktion mit den zellulosehaltigen Rejekten.

3. Verfahren nach Anspruch 1 oder 2, wobei der Schritt zur Abfalltrennung das Pressen des Abfalls umfasst.

4. Verfahren nach einem der Ansprüche 1 bis 3, wobei der Abfall feste Siedlungsabfälle umfasst.

5. Verfahren nach einem der Ansprüche 1 bis 4, wobei der Schritt zum Trennen von Rejekten die Verwendung eines optischen Sortierers umfasst.

6. Verfahren nach einem der Ansprüche 1 bis 5, wobei die durch den optischen Sortierer getrennten Zelluloseflocken mit Wasser gemischt werden und die Zelluloseflocken aufgeweicht werden.

7. Verfahren nach einem der Ansprüche 1 bis 6, wobei der Schritt zum Trennen von Rejekten die Verwendung eines Pulpers oder das Verdünnen der Rejekte mit erhitztem Wasser, das Verwirbeln der verdünnten Rejekte und das Sieben der verdünnten Rejekte umfasst.

8. Verfahren nach einem der Ansprüche 1 bis 7, wobei einige oder alle Zelluloserejekte in eine Aufschlämmung umgewandelt werden.

9. Verfahren nach einem der Ansprüche 1 bis 8, wobei die Aufschlämmung vor der Behandlung durch anaerobe Vergärung mit der Nassfraktion gemischt wird.

10. Verfahren nach Anspruch 8, wobei die Aufschlämmung vor der anaeroben Vergärung behandelt wird, um Schwimmstoffe und/oder Sand zu entfernen.

11. Verfahren nach einem der Ansprüche 1 bis 10, ferner umfassend das Trennen von zellulosehaltigem Material aus grobem Siebüberlauf und dessen Vergärung.

12. Verfahren nach Anspruch 11, umfassend das Mischen von zellulosehaltigem Material aus grobem Siebüberlauf mit zellulosehaltigem Ausschuss, das Herstellen einer Aufschlämmung, die die Mischung enthält, das Mischen der Aufschlämmung mit der Nassfraktion und das Vergären der gemischten Aufschlämmungs- und Nassfraktion.

13. System zur Feststoffabfallbehandlung, umfassend,
eine Presse (30) zum Trennen von Rejekten vom Abfall;
einen Pulper (102) oder optischen Sortierer (76); und
einen anaeroben Fermenter (46) zur Aufnahme von zellulosehaltigen Rejekten,
wobei der Pulper oder optische Sortierer die zellulosehaltigen Rejekte von den Rejekten trennt.

14. System nach Anspruch 13, umfassend einen Pulper (102).

15. System nach Anspruch 13 oder 14, umfassend einen optischen Sortierer (76).

## Revendications

1. Procédé comprenant les étapes suivantes, consistant à
séparer les rejets pour produire des rejets et une fraction humide ;
séparer les rejets cellulosiques des rejets ; et,
traiter les rejets cellulosiques par digestion anaérobie.

2. Procédé selon la revendication 1, comprenant en outre la codigestion de la fraction humide avec les rejets cellulosiques.

3. Procédé selon la revendication 1 ou la revendication 2, dans lequel l'étape de séparation des rejets comprend le pressage des rejets.

4. Procédé selon l'une quelconque des revendications 1 à 3, dans lequel les déchets comprennent des déchets solides municipaux.

5. Procédé selon l'une quelconque des revendications 1 à 4, dans lequel l'étape de séparation des rejets comprend l'utilisation d'une trieuse optique.

6. Procédé selon l'une quelconque des revendications 1 à 5, comprenant le mélange des peluches cellulosiques séparées au moyen de la trieuse optique avec de l'eau et la macération des peluches cellulosiques.

7. Procédé selon l'une quelconque des revendications 1 à 6, dans lequel l'étape de séparation des revendications comprend l'utilisation d'une dépulpeuse ou la dilution des rejets avec de l'eau chauffée, le culbutage des rejets dilués et le criblage des rejets dilués.

8. Procédé selon l'une quelconque des revendications 1 à 7, dans lequel une partie ou la totalité des rejets cellulosiques est convertie en boue.

9. Procédé selon l'une quelconque des revendications 1 à 8, dans lequel la boue est mélangée à la fraction humide avant d'être traitée par digestion anaérobie.

10. Procédé selon la revendication 8, dans lequel la boue est traitée pour éliminer les flottants et/ou les gravillons avant la digestion anaérobie.

11. Procédé selon l'une quelconque des revendications 1 à 10, comprenant en outre la séparation de la matière cellulosique des résidus de tamisage grossiers et sa digestion.

12. Procédé selon la revendication 11, comprenant le mélange de matières cellulosiques provenant des résidus de criblage grossier avec des rejets cellulosiques, la production d'une boue comprenant le mélange, le mélange de la boue avec la fraction humide, et la digestion de la boue mélangée et de la fraction humide.

13. Système de traitement des rejets solides comprenant,
une presse (30) destinée à séparer les rejets des déchets ;
une dépulpeuse (102) ou une trieuse optique (76) ; et,
un digesteur anaérobie (46) destiné à recevoir les rejets cellulosiques,
dans lequel la dépulpeuse ou la trieuse optique sépare les rejets cellulosiques des rejets.

14. Système selon la revendication 13 comprenant une dépulpeuse (102).

15. Système selon la revendication 13 ou la revendication 14 comprenant une trieuse optique (76).
